# EUROPEAN PATENT SPECIFICATION

(11) **EP 4 091 835 B1**
(45) Date of publication and mention of the grant of the patent: **11.11.2026**
(21) Application number: 22172006.3
(22) Date of filing: 06.05.2022
(51) Int. Cl.: B60C 1/00, C08L 9/00

(54) **PLASTICIZER SYSTEM AND RUBBER COMPOSITION FOR PNEUMATIC TIRE**
WEICHMACHERSYSTEM UND KAUTSCHUKZUSAMMENSETZUNG FÜR EINEN LUFTREIFEN
SYSTÈME DE PLASTIFIANT ET COMPOSITION DE CAOUTCHOUC POUR PNEUMATIQUE

(30) Priority: 19.05.2021 US 202117324476
(43) Date of publication of application: 23.11.2022
(73) Proprietor: The Goodyear Tire & Rubber Company, Akron, OH 44316 (US)
(72) Inventor: ISITMAN, Nihat Ali, Hudson, 44236 (US); GOLDBERG, Matthew Adam, Munroe Falls (US)
(74) Representative: Leslie, Edward

(56) References cited:
- EP-A1- 3 351 405
- EP-A1- 3 450 206
- US-A1- 2017 058 112
- US-A1- 2019 061 425
- US-A1- 2019 062 537

## Description

### Field of the Invention

The present exemplary embodiments relate to a plasticizer system used with a rubber composition either partially derived from or devoid of petroleum-based oils and resins. It finds particular application in conjunction with tire treads and will be described with particular reference thereto. However, it is appreciated that the present exemplary embodiments are also amenable to other like applications.

### Background of the Invention

In an ongoing effort to improve sustainability in the tire industry, certain rubber compositions were developed in which soybean oil replaces the petroleum-based rubber processing oil (comprised of at least one of naphthenic and paraffinic oils). However, the incorporation of more sustainable compositions in tire treads has revealed some compromise to certain tread properties. For example, while soybean oil improves sustainability (with an unexpected improvement in low temperature winter performance too), the benefits are to the detriment wet braking performance. There is a desire to develop tread rubber compositions from sustainable, renewable non-petroleum derived sources from which there is little to no compromise in tread performance.

To achieve a balance of tread rubber performances from tread rubber compositions containing a non-petroleum derived rubber processing oil, it is recognized that adjustments to rubber compositions are needed.

To meet the challenge of providing a tread rubber composition from sustainable, renewable non-petroleum derived sources, it is desired to evaluate a plasticizer system that:
(A) partially or fully replaces a petroleum-based rubber plasticizing oil (e.g., comprising at least one of naphthenic and paraffinic oils) with a vegetable triglyceride oil such as, for example, soybean oil,
(B) includes a hydrocarbon plasticizing resin selected from a petroleum-derived hydrocarbon and a non-petroleum derived hydrocarbon, such as polyterpene, wherein the hydrocarbon plasticizing resin is added to the rubber composition to improve, or at least maintain the balance between, tire performance characteristics, such as, low temperature winter performance and wet braking, and
(C) forms a rubber composition with solution polymerized styrene-butadiene rubber (SSBR) pre-extended with an oil not derived from petroleum.

While plasticizer systems containing a combination of oil and resin are used in various rubber compositions, including rubber compositions for tire components, inclusion of the disclosed plasticizer system with a solution polymerized styrene-butadiene rubber (SSBR) pre-extended with an oil not derived from petroleum is considered to be a significant departure from conventional practice.

EP 3 351 405 A1 describes in one embodiment a rubber composition for a tire tread comprising 50 phr of soybean oil extended SSBR, 15 phr of ESBR, 44 phr of 1,4-polybutadiene rubber, 8 phr of freely added soybean oil and 10 phr of resin.

### Summary of the Invention

The invention relates to a rubber composition in accordance with claim 1 and to a tire in accordance with claim 11.

Dependent claims refer to preferred embodiments of the invention.

Preferably, the tire is a pneumatic tire.

By desiring the rubber composition to contain fewer to no materials derived from petroleum, it is meant that the plasticizer system and/or the rubber composition will contain minimal, if any, petroleum-based processing oil. For example, it is desired that the rubber composition be limited to from zero to 10 phr of petroleum-based processing oil, preferably to from zero to 3 phr or from zero to 1 phr of petroleum-based processing oil.

Processing oil may be included in the rubber composition as extending oil typically used to extend elastomers. Processing oil may also be included in the rubber composition by addition of the oil directly during rubber compounding. The processing oil used in the rubber composition may include both extending oil present in the elastomers and process oil added during compounding. Suitable process oils include various oils as are known in the art, including aromatic, paraffinic, naphthenic, vegetable triglyceride oils, and low PCA oils, such as MES, TDAE, SRAE and heavy naphthenic oils. Suitable low PCA oils include those having a polycyclic aromatic content of less than 3 percent by weight as determined by the IP346 method. Procedures for the IP346 method may be found in *Standard Methods for Analyis & Testing of Petroleum and Related Products* and *British Standard* 2000 Parts, 2003, 62^{nd} edition, published by the Institute of Petroleum, United Kingdom.

A suitable vegetable triglyceride oil comprises a combination of saturated and unsaturated esters where the unsaturated esters comprise a combination of at least one of oleic acid ester, linoleate acid ester and linoleate acid ester. The saturated esters may comprise, for example, and not intended to be limiting, at least one of stearic acid ester and palmitic acid ester.

In one embodiment, the vegetable triglyceride oil comprises at least one of soybean oil, sunflower oil, rapeseed oil, and canola oil. In practice, the plasticizer system includes at least one of soybean oil and sunflower oil.

Representative resins include coumarone type resins, including coumarone-indene resins and mixtures of coumarone resins, naphthenic oils, phenol resins, and rosins. Other suitable resins include phenol-terpene resins such as phenol-acetylene resins, phenol-formaldehyde resins, alkyl phenol-formaldehyde resins, terpene-phenol resins, polyterpene resins, and xylene-formaldehyde resins. Further suitable resins include petroleum hydrocarbon resins such as synthetic polyterpene resins; aromatic hydrocarbon resins; resins resulting from the polymerization of styrene and alphamethyl styrene; aliphatic hydrocarbon resins; aliphatic cyclic hydrocarbon resins, such as dicyclopentadiene resins; aliphatic aromatic petroleum resins; hydrogenated hydrocarbon resins; hydrocarbon tackified resins; aliphatic alicyclic petroleum resins; rosin derivatives; and terpene resins.

The plasticizing resin comprises at least a hydrocarbon resin. In one embodiment, the plasticizing resin comprises hydrocarbon resins and excludes phenol-terpene resins. In one embodiment, the plasticizing resin is selected from hydrocarbon resins synthesized by cationic polymerization of styrene and alphamethyl styrene. In one embodiment, the plasticizing resin comprises at least copolymer resins of styrene and α-methyl styrene or polyterpene resins. In one embodiment, the plasticizing resin comprises at least copolymer resins of styrene and α-methyl styrene and excludes a polyterpene resin.

Suitable styrene/α-methyl styrene resin is derived from styrene and alphamethylstyrene. It is considered that, in a preferred aspect, its glass transition temperature (Tg) characteristic combined with its molecular weight (Mn) and molecular weight distribution (Mw/Mn) provides a suitable compatibility of the resin in the rubber composition, the degree of compatibility being directly related to the nature of the rubber composition.

The presence of the styrene/alphamethylstyrene resin in the rubber compound is considered herein to be beneficial because of observed viscoelastic properties of the tread rubber composition such as complex and storage modulus, loss modulus tan delta and loss compliance at different temperature/frequency/strain as hereinafter generally described.

The properties of complex and storage modulus, loss modulus, tan delta and loss compliance are understood to be generally well known to those having skill in such art. They are hereinafter generally described.

The glass transition temperature Tg of the copolymer resin is considered herein to be in a range of 20° C to 100° C, alternatively 30° C to 80° C, depending somewhat upon an intended use of the prepared tire and the nature of the polymer blend for the tire tread.

The glass transition temperature Tg for resins is determined as a peak midpoint by a differential scanning calorimeter (DSC) at a temperature rate of increase of 10°C per minute, according to ASTM D6604 or equivalent.

The styrene/alphamethylstyrene resin is considered herein to be a relatively short chain copolymer of styrene and alphamethylstyrene with a styrene/alphamethylstyrene molar ratio in a range of 0.40 to 1.50. In one aspect, such a resin can be suitably prepared, for example, by cationic copolymerization of styrene and alphamethylstyrene in a hydrocarbon solvent.

Thus, the contemplated styrene/alphamethylstyrene resin can be characterized, for example, by its chemical structure, namely, its styrene and alphamethylstyrene contents and softening point and, if desired, by its glass transition temperature, molecular weight and molecular weight distribution.

The amount of styrene/alphamethylestyrene resin in the rubber composition ranges from 10 to 20 phr.

Suitable styrene/alphamethylstyrene resin is available commercially as Sylvatraxx Resin 4401 from Arizona Chemical.

Suitable polyterpene resins may comprise, for example, polymers of at least one of limonene, alpha pinene and beta pinene and having a softening point in a range of from 60 C to 160 C.

In one embodiment, the amount of polyterpene resin in the rubber composition ranges from 10 to 20 phr.

In one embodiment, the polyterpene resin is Sylvatraxx Resin 4150 from Arizona Chemical.
In one embodiment, the polyterpene resin may be a polymer of α-pinene such as Dercolyte A 115 from DRT.

The styrene-butadiene rubber can be produced by polymerizing styrene in a hydrocarbon solvent by anionic polymerization using an organic alkali metal and/or an organic alkali earth metal as an initiator, adding a terminating agent compound having a primary amino group protected with a protective group and/or a thiol group protected with a protecting group and/an alkoxysilyl group to react it with a living polymer chain terminal at the time when the polymerization has substantially completed, and then conducting deblocking, for example, by hydrolysis or other appropriate procedure. In one embodiment, the styrene-butadiene rubber can be produced as disclosed in US-B-7,342,070. In another embodiment, the styrene-butadiene rubber can be produced as disclosed in WO-A-2007/047943. The solution polymerization prepared SBR (SSBR) preferably has a bound styrene content in a range of 5 to 50, more preferably 9 to 36, percent.

In a preferred embodiment, the SSBR is pre-extended with 20 to 30 phr, preferably 25 phr, of non-petroleum derived oil, such as, vegetable triglyceride oil and, more preferably, comprising at least soybean oil.

In practice, it is desired that the additional conjugated diene-based elastomer comprises a combination of cis 1,4-polybutadiene and cis 1,4-polyisoprene rubber.

The cis 1,4-polyisoprene rubber may be at least one of natural and synthetic cis 1,4-polybutadiene rubber.

A reference to cis 1,4-polybutadiene rubber in this application means a 1,4-polybutadiene rubber having at least 90 percent cis 1,4-units, more preferably at least 92 percent or at least 95 percent cis 1,4-units. A reference to cis 1,4-polyisoprene rubber in this application means a 1,4-polyisoprene rubber having at least 90 percent cis 1,4 units.

The additional conjugated diene-based elastomer is present in the rubber composition in the aforesaid amount of from 55 to 80 phr. The additional conjugated diene-based elastomer may comprise from 15 to 55 phr and, more preferably, from 30 to 50 phr and, most preferably, from 40 to 45 phr of cis polybutadiene and from 5 to 45 phr and, more preferably, from 10 to 40 phr and, most preferably, from 15 to 35 phr of cis 1,4-polyisoprene rubber.

It is readily understood by those having skill in the art that the rubber composition of the tread rubber would be compounded by methods generally known in the rubber compounding art, such as mixing the various sulfur-vulcanizable constituent rubbers with variously commonly used additive materials such as, for example, curing aids, such as sulfur activators, retarders and accelerators, fillers, pigments, fatty acid, zinc acid, waxes, antioxidants and antiozonants, peptizing agents and reinforcing materials such as, for example, carbon black. As known to those skilled in the art, depending on the intended use of the sulfur vulcanizable and sulfur vulcanized material (rubbers), the additives mentioned above are selected and commonly used in conventional amounts.

Representative examples of sulfur donors include elemental sulfur (free sulfur), an amine disulfide, polymeric polysulfide and sulfur olefin adducts. In one embodiment, the sulfur-vulcanizing agent is elemental sulfur. The sulfur-vulcanizing agent may be used in an amount ranging from 0.5 to 8 phr, alternatively with a range of from 1.5 to 6 phr. Typical amounts of processing aids comprise 1 to 50 phr. Typical amounts of antioxidants comprise 1 to 5 phr. Representative antioxidants may be, for example, diphenyl-p-phenylenediamine and others, such as, for example, those disclosed in The Vanderbilt Rubber Handbook (1978), pages 344 through 346. Typical amounts of antiozonants comprise 1 to 5 phr. Typical amounts of fatty acids, if used, which can include stearic acid comprise 0.5 to 3 phr. Typical amounts of zinc oxide comprise 2 to 5 phr. Typical amounts of waxes comprise 1 to 5 phr. Often microcrystalline waxes are used. Typical amounts of peptizers comprise 0.1 to 1 phr. A typical peptizer may be, for example, dibenzamidodiphenyl disulfide.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 to 4, alternatively 0.8 to 1.5, phr. In another embodiment, combinations of a primary and a secondary accelerator might be used with the secondary accelerator being used in smaller amounts, such as from 0.05 to 3 phr, in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be a guanidine, dithiocarbamate or thiuram compound.

Other curatives may be used, including but not limited to from 0.5 to 5 phr of 1,6-bis(N,N' dibenzylthiocarbamoyldithio)-hexane available as Vulcuren from Lanxess.

The presence and relative amounts of the above additives are not considered to be an aspect of the present invention unless otherwise indicated, which is more primarily directed to a rubber composition made using a plasticizer system either partially derived from or devoid of petroleum-based oils and resins. The rubber composition may be incorporated in a variety of rubber components of a tire.

Representative of such tire component is, for example, a tire tread such including at least one of tread cap and/or tread base rubber layer tire sidewall, tire carcass component, such as, for example, a carcass cord ply coat, tire sidewall stiffening insert, an apex adjacent to or spaced apart from a tire bead, wire coat, inner liner tire chafer and/or tire bead component. The tread and/or tires can be built, shaped, molded and cured by various methods which will be readily apparent to those skilled in the art. In practice, the tire tread is intended to be ground-contacting.

A pneumatic tire of the present invention may be a race tire, passenger tire, aircraft tire, agricultural, earthmover, off-the-road, or truck tire. In one embodiment, the tire is a passenger or truck tire. The tire may also be a radial or bias.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions, and the volume and nature of the components. For example, the thermomechanical working may be from 1 to 20 minutes.

After mixing, the compounded rubber can be fabricated such as, for example, by extrusion through a suitable die to form a tire tread (including tread cap and tread base). The tire tread is typically built onto a sulfur curable tire carcass and the assembly thereof cured in a suitable mold under conditions of elevated temperature and pressure by methods well-known to those having skill in the art.

If used herein, the terms "compounded rubber", "rubber compound" and "compound" refer to rubber compositions containing elastomers which have been compounded, or blended, with appropriate rubber compounding ingredients. The terms "rubber" and "elastomer" may be used interchangeably unless otherwise indicated. It is believed that such terms are well known to those having skill in the art.

The following examples are presented for the purposes of illustrating the present invention. All parts are parts by weight (phr) unless specifically identified otherwise.

### EXAMPLE

In this example, the effect of the disclosed plasticizer system on the performance of a tread compound is illustrated. Rubber compositions were mixed in a multi-step mixing procedure following the recipes in Table 1. Standard amounts of curatives were also included. Rubber compounds were then cured in the tire and tested on vehicles for wet braking performance, rolling resistance (RR), and treadwear, with the results given in Table 2.

A Control rubber composition was prepared as Sample A with an emulsion polymerized SBR with petroleum oil.

For the Experimental rubber Sample B, the emulsion polymerized SBR was replaced with solution polymerized SSBR extended with soybean oil. The conventional petroleum-based rubber processing oil of Control Sample A was also replaced with soybean oil, with all other ingredients essentially being the same.

For the Experimental rubber Sample C, the composition of Sample B was modified by inclusion of polyterpene traction resin, with all other ingredients essentially being the same.

The basic formulations are illustrated in the following Table 1, which is presented in terms of parts per 100 parts by weight of rubber (phr).

**TABLE 1**

| | Samples | | |
|---|---|---|---|
| | Control | | Experimental |
| | A | B | C |
| Polybutadiene¹ | 45 | 45 | 40 |
| Emulsion SBR² | 28 | 0 | 0 |
| Natural rubber | 27 | 23 | 27 |
| Solution SBR³ | 0 | 32 | 33 |
| Petroleum oil | 17.5 | 0 | 0 |
| Soybean oil | 0 | 6.4 | 6.6 |
| Carbon Black | 75 | 77 | 76 |
| Antioxidant(s) | 4.3 | 4.3 | 4.3 |
| Stearic Acid | 2 | 2 | 2 |
| Traction Resin A⁴ | 3.5 | 15 | 0 |
| Traction Resin B⁵ | 0 | 0 | 14 |
| ZnO¹² | 3.0 | 3.0 | 3.0 |
| Sulfur¹³ | 1.7 | 1.7 | 1.7 |
| Accelerator | 1.1 | 1.2 | 1.2 |

| | | | |
|---|---|---|---|
| ¹High cis polybutadiene, obtained as BUDENE1223 from The Goodyear Tire & Rubber Company. ²Emulsion polymerized SBR obtained as Plioflex 1769 from The Goodyear Tire & Rubber Company. ³Solution polymerized SBR with styrene content of 33%, extended with 25 phr soybean oil. ⁴Copolymer of styrene and alpha-methylstyrene, Tg = +39° C, obtained as Sylvatraxx 4401 from Arizona Chemical. ⁵Polyterpene resin, Tg = +60° C, obtained as Sylvatraxx 4150 from Arizona Chemical. | | | |

Various cured rubber properties of the Control A and Experimental Samples B-C are reported in the following Table 2 with the results for tires of treads formed from Control rubber composition A being normalized to values of 100 and results for experimental tires with treads of rubber compositions B and C being related to the normalized values, i. e. the values for experimental Sample B and C tires are compared to the normalized values of 100 for Control A tire.

**TABLE 2**

| | Samples | | |
|---|---|---|---|
| | Control | | Experimental |
| | A | B | C |
| Petroleum oil | 7 | 0 | 0 |
| Soybean oil | 0 | 6.4 | 6.6 |
| Traction Resin A¹ | 3.5 | 15 | 0 |
| Traction Resin B² | 0 | 0 | 14 |
| Wet braking (higher is better) | 100 | 102 | 105 |
| Rolling resistance (higher is indication of beneficially lower rolling resistance) | 100 | 101 | 98 |
| Treadwear (higher is better) | 100 | 97 | 95 |

| | | | |
|---|---|---|---|
| ¹Copolymer of styrene and alpha-methylstyrene, Tg = +39° C, obtained as Sylvatraxx 4401 from Arizona Chemical. ²Polyterpene resin, Tg = +60° C, obtained as Sylvatraxx 4150 from Arizona Chemical. | | | |

As can be seen in Table 2, the overall performance properties of the rubber compositions B (partially devoid of petroleum-based plasticizer) and C (completely devoid of petroleum-based plasticizer) compared favorably with the performance properties of the Control Sample A.

In particular, it is seen that the wet braking performance of Samples B (partially devoid of petroleum-based plasticizer) and C (completely devoid of petroleum-based plasticizer) improved significantly over that of Control Sample A. Pneumatic tires with treads of Sample C (completely devoid of petroleum-based plasticizer) exhibited a wet braking performance value of 105, which is significantly improved over the normalized value of 100 for treads formed from the rubber composition of Control Sample A.

It is further seen that the rolling resistance of Sample B (partially devoid of petroleum-based plasticizer) improved over that of Control Sample A and the rolling resistance of Sample C is similar to that of Control Sample A.

It is further seen that the treadwear performances of Samples B and C are similar to that of Control Sample A.

It is hereby concluded that, for tire treads formed from rubber compositions partially or completely devoid of petroleum-based plasticizer, the overall balance of rubber performances is maintained or improved when the plasticizer includes a triglyceride vegetable oil (as extender oil in the solution SBR) and at least an aromatic hydrocarbon resin. It is further concluded that, for tire treads formed from rubber compositions partially or completely devoid of petroleum-based products, wet braking is significantly improved when the plasticizer includes a triglyceride vegetable oil (as extender oil in the solution SBR) and a hydrocarbon resin selected from an aromatic hydrocarbon and a non-petroleum derived hydrocarbon, such as polyterpene.

## Claims

1. A rubber composition comprising, based on 100 parts by weight of elastomer (phr): (A) a conjugated diene-based elastomer comprising:
(1) from 20 to 45 phr of a solution polymerized styrene-butadiene rubber (SSBR) extended with an oil not derived from petroleum;
(2) from 55 to 80 phr of at least one additional conjugated diene-based elastomer comprising at least one of polybutadiene, cis 1,4-polyisoprene rubber, and styrene/butadiene elastomer; and
(B) a plasticizer system comprising:
(1) from 4 to 8 phr, preferably 6 to 8 phr, of a plasticizing oil not derived from petroleum, and
(2) from 10 to 20 phr, preferably 12 to 18 phr, of a hydrocarbon plasticizing resin selected from a petroleum-derived hydrocarbon and a non-petroleum derived hydrocarbon;
wherein the at least one additional conjugated diene-based elastomer comprises from 15 to 55 phr of cis polybutadiene and from 5 to 45 phr of cis 1,4-polyisoprene rubber.

2. The rubber composition of claim 1, wherein the hydrocarbon plasticizing resin is a styrene/α-methyl styrene resin; and/or wherein the non-petroleum derived hydrocarbon resin is a polyterpene plasticizing resin.

3. The rubber composition of at least one of the previous claims, wherein the plasticizing oil is a triglyceride vegetable oil comprising at least one of soybean, sunflower, rapeseed, and canola oil.

4. The rubber composition of at least one of the previous claims, wherein the SSBR is pre-extended with 15 to 35 phr or with 20 to 30 phr, preferably 25 phr, of non-petroleum derived oil.

5. The rubber composition of at least one of the previous claims, wherein the extending oil is a triglyceride vegetable oil, preferably soybean oil.

6. The rubber composition of at least one of the previous claims, wherein the at least one additional conjugated diene-based elastomer comprises from 35 to 50 phr of cis polybutadiene and from 15 to 35 phr of cis 1,4-polyisoprene rubber.

7. The rubber composition of at least one of the previous claims, wherein the solution polymerized styrene-butadiene rubber has a bound styrene content in a range of from 9% to 36%.

8. The rubber composition of at least one of the previous claims, wherein the hydrocarbon plasticizing resin has a Tg in a range of from +20° C to +60° C; the Tg being measured according to the method defined in the description.

9. The rubber composition according to claims 2 to 8, wherein the polyterpene plasticizing resin has a Tg in a range of from +40° C to +80° C; the Tg being measured according to the method defined in the description.

10. The rubber composition of at least one of the previous claims, wherein the plasticizer system is devoid of petroleum-derived resin and oil.

11. A tire having a tread comprising the rubber composition of at least one of the previous claims.

## Patentansprüche

1. Kautschukzusammensetzung, die, bezogen auf 100 Gewichtsteile Elastomer (ThK), Folgendes umfasst:
(A) ein konjugiertes Elastomer auf Dienbasis, das Folgendes umfasst:
(1) 20 bis 45 ThK eines in Lösung polymerisierten StyrolButadien-Kautschuks (SSBR), der mit einem nicht-erdölbasierten Öl gestreckt ist;
(2) 55 bis 80 ThK mindestens eines zusätzlichen konjugierten Elastomers auf Dienbasis, das mindestens ein Elastomer umfasst, das aus Polybutadien, einem cis-1,4-Polyisopren-Kautschuk und einem Styrol/Butadien-Elastomer ausgewählt ist; und
(B) ein Weichmachersystem, das Folgendes umfasst:
(1) 4 bis 8 ThK, vorzugsweise 6 bis 8 ThK eines nicht-erdölbasierten Weichmacheröls; und
(2) 10 bis 20 ThK, vorzugsweise 12 bis 18 ThK eines Weichmacherharzes auf Basis von Kohlenwasserstoffen, das aus einem erdölbasierten Kohlenwasserstoff und einem nicht-erdölbasierten Kohlenwasserstoff ausgewählt ist;
wobei das zumindest eine zusätzliche konjugierte Elastomer auf Dienbasis 15 bis 55 ThK cis-Polybutadien und 5 bis 45 ThK cis-1,4-Polyisopren-Kautschuk umfasst.

2. Kautschukzusammensetzung nach Anspruch 1, wobei das Weichmacherharz auf Basis von Kohlenwasserstoffen ein Styrol/α-Methylstyrol-Harz ist; und/oder wobei das Harz auf einem nicht-erdölbasierten Kohlenwasserstoff ein Weichmacherharz auf Basis von Polyterpenen ist.

3. Kautschukzusammensetzung nach mindestens einem der vorstehenden Ansprüche, wobei das Weichmacheröl ein pflanzliches Triglyceridöl ist, das mindestens ein Öl umfasst, das aus Sojaöl, Sonnenblumenöl, Rapsöl und Canolaöl ausgewählt ist.

4. Kautschukzusammensetzung nach mindestens einem der vorstehenden Ansprüche, wobei das SSBR mit 15 bis 35 ThK oder mit 20 bis 30 ThK, vorzugsweise mit 25 ThK eines nicht-erdölbasierten Öls vorgestreckt ist.

5. Kautschukzusammensetzung nach mindestens einem der vorstehenden Ansprüche, wobei das Strecköl ein pflanzliches Triglyceridöl, vorzugsweise Sojaöl ist.

6. Kautschukzusammensetzung nach mindestens einem der vorstehenden Ansprüche, wobei das mindestens eine zusätzliche konjugierte Elastomer auf Dienbasis von 35 bis 50 ThK cis-Polybutadien und 15 bis 35 ThK cis-1,4-Polyisopren-Kautschuk umfasst.

7. Kautschukzusammensetzung nach mindestens einem der vorstehenden Ansprüche, wobei der in Lösung polymerisierte StyrolButadien-Kautschuk einen Gehalt an gebundenem Styrol aufweist, der in dem Bereich von 9 % bis 36 % liegt.

8. Kautschukzusammensetzung nach mindestens einem der vorstehenden Ansprüche, wobei das Weichmacherharz auf Basis von Kohlenwasserstoffen einen Tg-Wert aufweist, der in dem Bereich von +20 °C bis +60 °C liegt; wobei die Tg gemäß dem wie in der Beschreibung definierten Verfahren gemessen wird.

9. Kautschukzusammensetzung nach mindestens einem der Ansprüche 2 bis 8, wobei das Weichmacherharz auf Basis von Polyterpenen einen Tg-Wert aufweist, der in dem Bereich von +40 °C bis +80 °C liegt; wobei die Tg gemäß dem wie in der Beschreibung definierten Verfahren gemessen wird.

10. Kautschukzusammensetzung nach mindestens einem der vorstehenden Ansprüche, wobei das Weichmachersystem frei von erdölbasiertem Harz und Öl ist.

11. Reifen, der eine Lauffläche aufweist, die die Kautschukzusammensetzung nach mindestens einem der vorstehenden Ansprüche umfasst.

## Revendications

1. Composition de caoutchouc qui comprend, lorsqu'on se base sur 100 parties en poids d'élastomère (phr) :
(A) un élastomère conjugué à base d'un diène qui comprend :
(1) de 20 à 45 phr d'un caoutchouc de styrène-butadiène polymérisé en solution (SSBR) étendu avec une huile d'origine non pétrolière ;
(2) de 55 à 80 phr d'au moins un élastomère conjugué supplémentaire à base d'un diène qui comprend au moins un élastomère choisi parmi le polybutadiène, un caoutchouc de cis-1,4-polyisoprène, et un élastomère de styrène/butadiène ; et
(B) un système de plastification qui comprend :
(1) de 4 à 8 phr, de préférence de 6 à 8 phr d'une huile plastifiante d'origine non pétrolière ; et
(2) de 10 à 20 phr, de préférence de 12 à 18 phr d'une résine plastifiante à base d'hydrocarbures, qui sont choisis parmi un hydrocarbure d'origine pétrolière et un hydrocarbure d'origine non pétrolière ;
dans laquelle ledit au moins un élastomère conjugué supplémentaire à base d'un diène comprend de 15 à 55 phr de cis-polybutadiène et de 5 à 45 phr de caoutchouc de cis-1,4-polyisoprène.

2. Composition de caoutchouc selon la revendication 1, dans laquelle la résine plastifiante à base d'hydrocarbures est une de résine de styrène/α-méthyl styrène ; et/ou dans laquelle la résine à base d'hydrocarbures d'origine non pétrolière est une résine plastifiante à base de polyterpène.

3. Composition de caoutchouc selon au moins une des revendications précédentes, dans laquelle l'huile plastifiante est une huile végétale de triglycérides qui comprend au moins une huile choisie parmi l'huile de soja, l'huile de tournesol, l'huile de colza et l'huile de canola.

4. Composition de caoutchouc selon au moins une des revendications précédentes, dans laquelle le SSBR contient un taux de pré-extension de 15 à 35 phr d'huile d'origine non pétrolière.

5. Composition de caoutchouc selon au moins une des revendications précédentes, dans laquelle l'huile d'extension est une huile végétale de triglycérides, de préférence de l'huile de soja.

6. Composition de caoutchouc selon au moins une des revendications précédentes, dans laquelle ledit au moins un élastomère conjugué supplémentaire à base d'un diène comprend de 35 à 50 phr de cis-polybutadiène et de 15 à 35 phr de caoutchouc de cis-1,4-polyisoprène.

7. Composition de caoutchouc selon au moins une des revendications précédentes, dans laquelle le caoutchouc de styrène-butadiène polymérisé en solution possède une teneur en styrène lié qui se situe dans une plage allant de 9 % à 36 %.

8. Composition de caoutchouc selon au moins une des revendications précédentes, dans laquelle la résine plastifiante à base d'hydrocarbures présente une valeur Tg qui se situe dans une plage allant de +20 °C à +60 °C ; dans laquelle la Tg est mesurée en conformité avec le procédé tel qu'il est défini dans la description.

9. Composition de caoutchouc selon au moins une des revendications 2 à 8, dans laquelle la résine plastifiante à base de polyterpène présente une valeur Tg qui se situe dans une plage allant de +40 °C à +80 °C ; dans laquelle la Tg est mesurée en conformité avec le procédé tel qu'il est défini dans la description.

10. Composition de caoutchouc selon au moins une des revendications précédentes, dans laquelle le système de plastification est exempt d'huile et de résine d'origine pétrolière.

11. Bandage qui possède une bande de roulement qui comprend la composition de caoutchouc selon au moins une des revendications précédentes.
